# EUROPEAN PATENT SPECIFICATION

(11) **EP 1 939 079 B1**
(45) Date of publication and mention of the grant of the patent: **22.07.2009**
(21) Application number: 07022050.4
(22) Date of filing: 13.11.2007
(51) Int. Cl.: B62J 23/00, B62J 6/04, B62K 19/30

(54) **Vehicle having a cover arrangement structure**
Fahrzeug mit einer Abdeckungsstruktur
Véhicule avec une structure d'agencement de housse

(30) Priority: 28.12.2006 JP 2006356454
(43) Date of publication of application: 02.07.2008
(73) Proprietor: HONDA MOTOR CO., LTD., Tokyo 107-8556 (JP)
(72) Inventor: Maruyama, Tomoyuki, Wako-shi Saitama, 351-0193 (JP)
(74) Representative: Liska, Horst

(56) References cited:
- EP-A- 1 520 968
- JP-A- 10 302 509
- JP-A- 2002 104 268
- JP-A- 2005 088 798
- US-A1- 2005 098 596

## Description

The present invention relates to a vehicle such as a scooter type motorcycle or the like comprising a cover arrangement structure according to the preamble of claim 1.

A vehicle comprising a cover arrangement structure according to the preamble of claim 1 is known from US 2005/098 596 A1.

JP 10-302509 A discloses a scooter type motorcycle comprising a cover arrangement structure, said vehicle including a seat, a body frame extending below the seat and toward the rearward of the vehicle, a body cover covering said body frame and including a rear cover which covers the body frame below the seat at least from both sides and from the rearward and lamp devices attached to the rear cover.

JP 2005-088798 A discloses a carrier device for a vehicle in which a rear grip and side grips are consolidated with a carrier, and the side grips are located on the left and right of the rear of tandem seats. A tail cover having approximately a triangular side elevation is installed covering the space formed between the lower parts of the side grips and the carrier and the top of the rear cover. The rear end of the tail cover is attached to a stay using bolts, wherein the stay is attached to the rear half of a frame and welded to a bracket supporting the carrier.

JP 2005-104268 A discloses an armoring cover assembling structure for a motorcycle which armoring cover includes a tail light as an armoring part and the armoring cover including the tail light is divided into plural parts, wherein the armoring cover is detachably assembled to a scooter type motorcycle body.

EP 1 520 968 A1 discloses a further scooter type motorcycle comprising a cover arrangement structure, said vehicle including a seat, a body frame extending below the seat and toward the rear of the vehicle, a body cover covering said body frame and including a rear cover which covers the body frame below the seat from both sides and the rear and lamp devices attached to the rear cover.

One of the conventional scooter type vehicles is configured as below. A rear cover which covers a body frame below a seat from the both sides, namely, the left and right, and from the rearward is such that left and right rear side covers are integrally formed to be joined together at the rear end of a vehicle body and a tail lamp is attached to the rear end. Such a tail lamp and the rear cover thus joined integrally are formed as a sub-assembly, which is adjustably assembled to the body frame through a loose insertion hole so as to accommodate positional displacement encountered at the time of assembly or formation (see patent document JP-A-11-310177).

In the rear cover arrangement structure as described above, the rear cover is generally mounted to a vehicle with its front or rear side mounted as a positional reference and with the other side adjustably mounted. Since the mounted portion on the referential side does not need the adjustment, it is often formed with a circular hole. In this case, the circular hole is hidden by a fastening member so that a gap is not exposed.

On the other side, the adjustable mounted portion is adjustably configured usually using a longitudinal hole or the like. Use of the longitudinal hole tends to produce a gap, which is likely to degrade external appearance. To eliminate such a disadvantage, it is devised not to expose the gap by attaching to the frame an attachment projection projecting from the inside surface of the cover to the inside of the vehicle. However, in the vehicle of the conventional art, it is difficult to mount the attachment projection between a tail lamp and the frame at the vehicle-widthwise central portion of the rear end.

For this reason, it is conceivable that attachment projections are provided on both, left and right, rear side covers so as to be spaced apart from each other for avoiding the tail lamp. In this case, since the attachment projections are largely spaced apart from side to side, a problem arises in that workability is degraded at the time of assembly, which increases assembly manhours.

It is an object of the present invention to provide a vehicle with an improved workability at the time of assembling a rear center cover and a rear rack.

This object is achieved by a vehicle having the features of claim 1.

According to claim 1 in a vehicle comprising a cover arrangement structure, said vehicle including a seat, a body frame extending below the seat and toward the rearward of the vehicle, a body cover covering the body frame and including a rear cover which covers the body frame below the seat at least from both sides and from the rearward, and lamp devices attached to the rear cover, the rear cover being mounted to a vehicle body side at front and rear portions thereof, the rear cover includes a pair of left and right rear side covers and a rear center cover which covers a rear end of the body frame from the rearward; the lamp devices are composed as a pair of left and right ones, which are attached to the respective rear ends of the left and right rear side covers so as to be spaced apart from side to side; and an attachment projection is provided on the rear center cover so as to project between the left and right lamp devices and inside the vehicle and is attached to the rear end of the body frame in a position-adjustable manner.

Furthermore, according to claim 1, the body cover includes an extension provided to cover the attachment projection from above, the extension is formed with an opening which opens upward, and the attachment projection is provided to be oriented to the opening.

Furthermore, according to claim 1, a rack is provided above a rear end portion of the body cover and a fixing portion extending from a lower surface of the rack is secured to the body frame through the opening.

Moreover, according to claim 2, the body cover is provided with an elevated portion which covers an outer circumference of the fixing portion of the carrier and which is elevated so as to be close to or come into contact with the bottom surface of the rack forming a carrier and the elevated portion is provided with the opening on a side opposed to the bottom surface of the rack.

Moreover, according to claim 3, the rear cover is divided into the rear side covers and the rear center cover by the lamp devices and the left and right rear side covers are integrally joined to the single rear center cover through the left and right lam devices, respectively.

According to the invention of claim 1, the attachment projection projecting from the rear center cover into the inside of the vehicle between the left and right lamp devices separately disposed at the rear end portion of the rear side cover is position-adjustably attached to the rear end portion of the body frame. Thus, the attachment projection can be provided using an unused space between the left and right lamp devices. Since the attachment projection is disposed close to the vehicle body center, the fastening work of the rear cover along with its adjustment is facilitated at the central position of the vehicle body as compared with the case where the mounting work of the rear side cover is done for each of the left and right of the vehicle body. This improves workability.

Moreover, even if the extension of the rear cover covers the attachment projection from above, since the mounting work can be done from above the vehicle through the opening, the workability is further improved particularly in mounting work that needs such adjustment.

Moreover, since the rack is secured to the body frame by use of the opening, it is not necessary to provide another opening in the body cover to secure the rack to the frame. Thus, there is no possibility that an increase of an opening portion degrades the strength and external appearance of the cover.

According to the invention of claim 2, the opening provided in the position-adjustable rear cover is largely formed to have a margin as an adjustable margin with respect to the rack secured to the body frame. This may probably produce a gap between the rack fastening portion and the opening of the extension. However, the opening is provided on a side opposed to the bottom surface of the rack. Thus, the gap is hidden to become inconspicuous.

According to the invention of claim 3, the lamp device is used to connects the rear side cover with the rear center cover, whereby the rear cover is structured to be divided into the rear side cover and the rear center cover. Thus, the rear cover which otherwise tends to be increased in size can be divided into small components.

### Brief Description of the Drawings

Fig. 1 is a lateral view of motorcycle according to an embodiment.
Fig. 2 is a lateral view of a body frame 1.
Fig. 3 is a plan view of the body frame 1.
Fig. 4 is an enlarged lateral view illustrating the vicinity of a rear portion of the body frame of Fig. 2.
Fig. 5 is a rear view illustrating the vicinity of a boss.
Fig. 6 is a perspective view of a rear carrier.
Fig. 7 is a cross-sectional view taken along line 7-7 of Fig. 6.
Fig. 8 is an exploded lateral view mainly illustrating a rear cover.
Fig. 9 is an exploded plan view mainly illustrating the rear cover.
Fig. 10 is a lateral view of a left rear side cover.
Fig. 11 is a plan view of a left rear side cover.
Fig. 12 is a lateral view of a rear combination lamp.
Fig. 13 is a rear view of the rear combination lamp.
Fig. 14 is a cross-sectional view taken along line 14-14 of Fig. 13.
Fig. 15 is a lateral view of a rear center cover.
Fig. 16 is a view as viewed from arrow X of Fig. 15.
Fig. 17 is a plan view of a rear center cover.
Fig. 18 is a cross-sectional view taken along line 18-18 of Fig. 17.
Fig. 19 illustrates an attachment projection as viewed from the direction of a fastening axis.
Fig. 20 is a cross-sectional view taken along line 20-20 of Fig. 15.
Fig. 21 is a cross-sectional view taken along line 21-21 of Fig. 10.
Fig. 22 is a cross-sectional view taken along line 22-22 of Fig. 10.
Fig. 23 is a cross-sectional view taken along line 23-23 of Fig. 10.
Fig. 24 is a cross-sectional view taken along line 24-24 of Fig. 16.
Fig. 25 is a cross-sectional view taken along line 25-25 of Fig. 15.

### Best Mode for Carrying out the Invention

An embodiment will be described below with reference to the drawings.

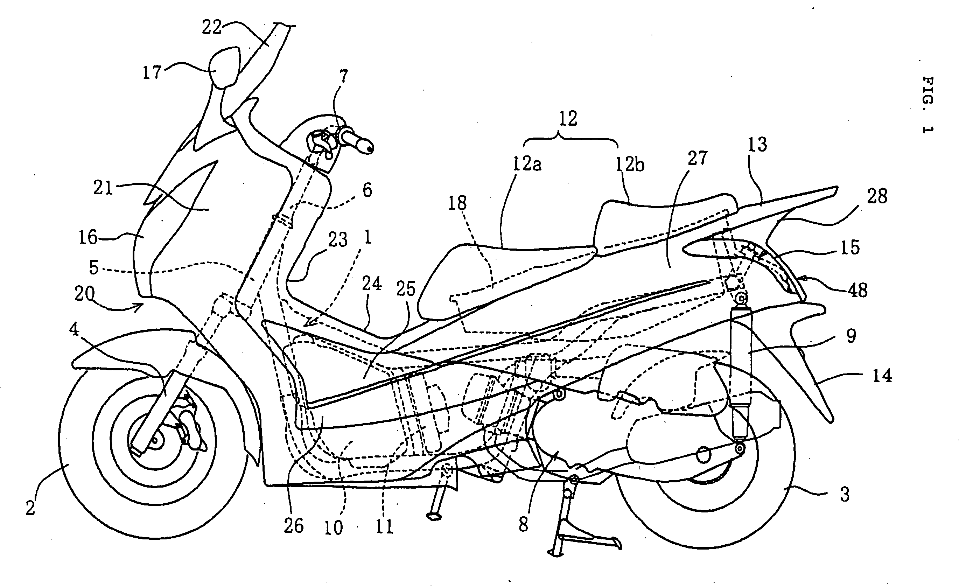

Fig. 1 is a lateral view of a motorcycle according to the present embodiment. The motorcycle includes a front wheel 2 and a rear wheel 3, respectively, forward of and rearward of a body frame 1. the front wheel 2 is supported by a pair of left and right front forks 4. The front forks 4 are connected to a steering shaft 6 supported by a head pipe 5 provided at the front end portion of the body frame 1. The front wheel 2 is steered by a handlebar 7 coupled to the steering shaft 6.

The rear wheel 3 is supported by the rear end portion of a power unit 9. The front portion of the power unit 8 is swingably supported by the body frame 1. A cushion unit 9 is spanned between the rear end portion of the power unit and the rear end portion of the body frame 1. Reference numeral 10 denotes a fuel tank, which is supported by the lower portion of the body frame 1 at a position below the handlebar 7 and rearward of the front wheel 2. A radiator 11 is disposed rearward of the fuel tank 10 and forward of the power unit 8. Reference numeral 12 denotes a seat, which is disposed rearward of the handlebar 7 and of the head pipe and above the power unit 8.

The seat 12 is of a tandem type and includes a front seat 12a and a rear seat 12b. A rear carrier 13 corresponding to a rack of the present invention extends obliquely upwardly and rearward. A pair of left and right rear combination lamps 15 (corresponding to rear lamp devices of the present invention) are provided rearward of the front seat 12, below the rear carrier 13 and above the rear fender 14. Reference numeral 16 denotes a head light unit and 17 denotes a mirror.

The body frame 1 is covered by a body cover 20. The body cover 20 includes a front cover 21 which covers the head pipe 5 from the front; a windshield 22; a leg shield 23 which cover the rear sides of the head pipe 5 and steering shaft 6; and a front center cover 24 which covers from the lower end of the leg shield 23 to above the front portion of the body frame 1. The body cover 20 further includes a pair of left and right front side covers 25 which cover the front center cover 24 from below; a step floor 26 on which occupants' feet are put; a pair of left and right rear side covers 27 cover below the seat; and a rear center cover 28 which connects the rear ends of the left and right rear side covers 27 via the left and right rear combination lamps 15, respectively.

A sub-assembly of the left and right rear combination lamps 15, the left and right rear side covers 27 and the single rear center cover 28 forms a rear cover 48. A luggage box 18 is arranged inside the rear cover 48 and below the seat 12 and supported by the body frame 1.

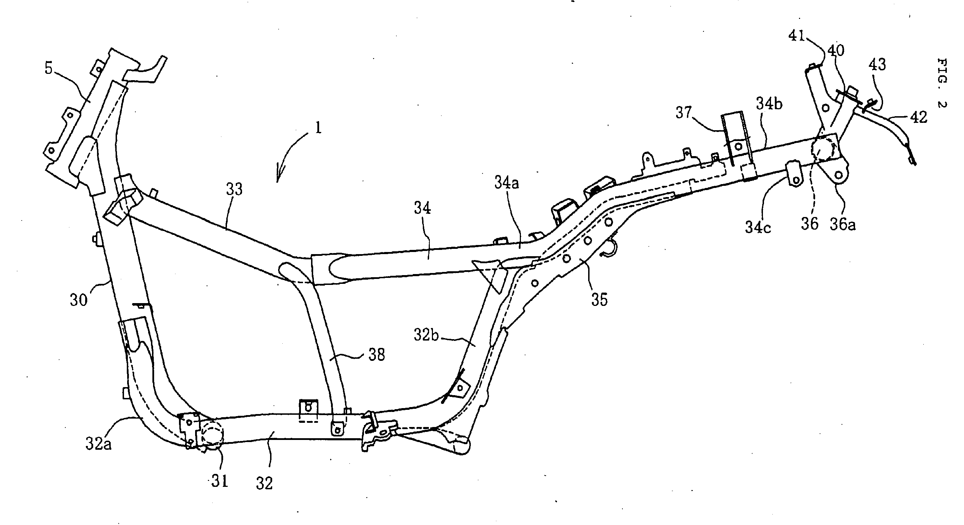

Fig. 2 is a lateral view of the body frame 1. A down tube 30 is provided to extend obliquely downwardly and rearward from the head pipe 5 and connect with a cross pipe 31 at its lower end. The cross pipe 31 is connected to the front portion of a lower pipe 32. A front end portion 32a of the lower pipe 32 bends upward and is welded to the lower lateral surface of the down tube 30.

An upper pipe 33 extends rearward toward the upside of the lower pipe 32 from the upper portion of the down tube 30 in the vicinity of the head pipe 5. A rear pipe 34 is welded at its front end to the rear end lateral surface of the upper pipe 33. The rear pipe 34 further extends rearward from the upper pipe 33 and connects at its intermediate portion 34a with an upper end of a rising portion 32b which bends upward from the rear portion of the lower pipe 32. This connecting portion is reinforced by a reinforcing portion 35.

A rear portion 34b of the rear pipe 34 further extends obliquely upwardly and rearward from the connecting portion with the rising portion 32b and is welded at its rear end portion to a cross pipe 36. A boss 40 is provided to extend obliquely upwardly and rearward from the cross pipe 36. A stay 41 extends obliquely upwardly and forwardly from the front of the intermediate portion of the boss 40. A pipe 42 extends obliquely downward and rearward from the rear of the upper end portion of the boss 40. A stay 43 is provided near the boss 40. Reference numeral 36a denotes a stay adapted to be attached with an upper end portion of a cushion unit 9 (Fig. 1) and welded to the cross pipe 36. Reference numeral 34c denotes a stay adapted to be attached with a rear fender 14 (Fig. 1). Reference numeral 37 denotes a stay adapted to be attached with the rear carrier 13 (Fig. 1).

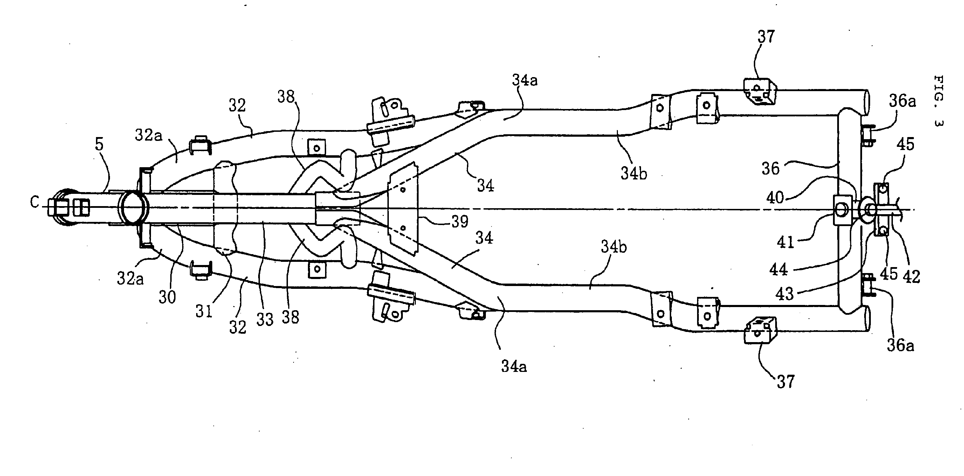

Fig. 3 is a plan view of the body frame 1. The head pipe 5, the down tube 30, the upper pipe 33 and the boss 40 are located on the body center C. Among them, each of the down tube 30 and the upper pipe 33 is a single one. The lower pipes 32 are a pair of left and right ones which extend from the down tube 30 leftward and rightward in such a manner that the distance therebetween is increased as they go rearward, then extending rearward. Also the rear pipes 34 are a pair of left and right ones whose front portions extend from the rear end portion of the upper pipe 33 toward the left and right portions of the vehicle body in such a manner that the distance therebetween is increased as they go rearward. Then, the rear pipes 34 are each joined to a corresponding one of the lower pipes 32 at its intermediate portion 34a. The left and right rear pipes 34 are provided at their rear portions 34b with a pair of left and right attachment stays 37, respectively. The rear ends of the left and right rear portions 34b are connected by the cross pipe 36.

Reference numeral 38 denotes reinforcing pipes each of which vertically connect the upper pipe 33 with a corresponding one of the lower pipes 32 (see Fig. 2) and which are provided as a pair of left and right ones. Each of the reinforcing pipes 38 bends from the upper pipe 33 and is connected with a corresponding one of the lower pipes 32. Reference numeral 39 is a cross plate connecting the left and right rear pipes 34.

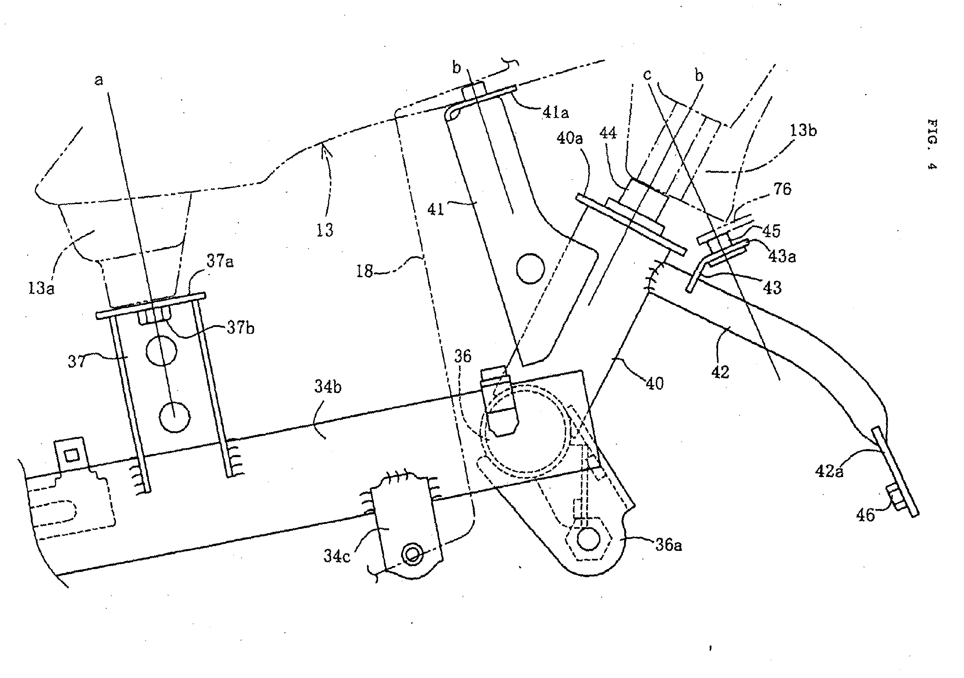

Fig. 4 is an enlarged lateral view illustrating the vicinity of the rear portion 34b in Fig. 2. A nut 37b is welded to the top 37a of the attachment stay 37. An attachment boss 13a provided at the front end portion of the rear carrier 13 is fastened from above to the attachment boss 13a by a bolt (not shown) along a fastening axis "a" extending obliquely downwardly and rearward. The boss 40 protrudes obliquely upwardly from the cross pipe 36. An attachment boss 13b is fastened from above to the nut 44 disposed at the upper end 40a. The attachment boss 13b is formed at an anteroposteriorly intermediate portion of the rear carrier 13.

The stay 41 is a member formed in an almost-U-shape in cross-section. A top 41 a of the stay 41 supports the lower surface of the rear end portion of the luggage box 18 to indirectly support the seat 12 placed on the luggage box 18 (see Fig. 1). The attachment boss 13b of the rear carrier 13 is fastened from above to the nut 44 by a bolt (not shown) along a fastening axis "b" extending obliquely downwardly and forwardly. The nut 44 is provided on the upper end 40a of the boss 40.

The stay 43 is formed with a slant surface 43a facing the oblique upside and the front and a nut 45 is provided on the slant surface 43a. An attachment projection 76 of the rear center cover is put on this nut and fastened from above by a bolt (not shown) along a fastening axis "c" extending toward the oblique downside and the rearward. The pipe 42 is formed at its rear end with a flat portion 42a at which a nut 46 is provided. The rear end lower portion of the rear combination lamp is bolted to the nut 46.

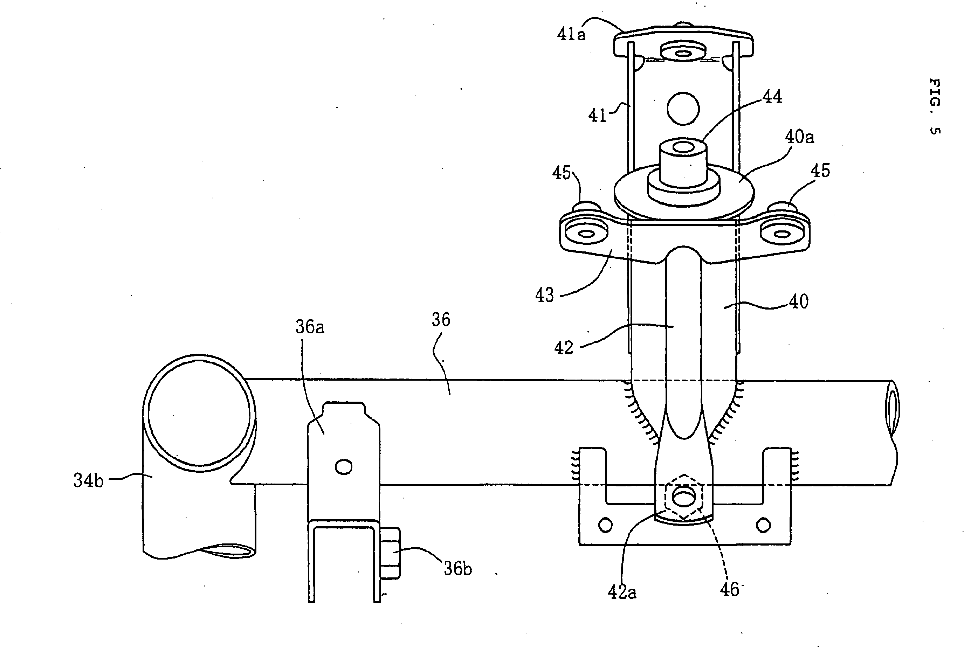

Fig. 5 is a view illustrating eth vicinity of the boss 40 as viewed from the rear. The boss 40 is welded to the central upper surface of the cross pipe 36. The stay 43 is arranged to extend leftward and rightward (vehicle-widthwise) and welded to the pipe 42 at its horizontal center. The nut 45 is welded to each of left and right protrudent ends of the stay 43. The stay 36a is welded to the lengthwise near-end portion of the cross pipe 36. Reference numeral 36b denotes a nut welded to the stay 36a.

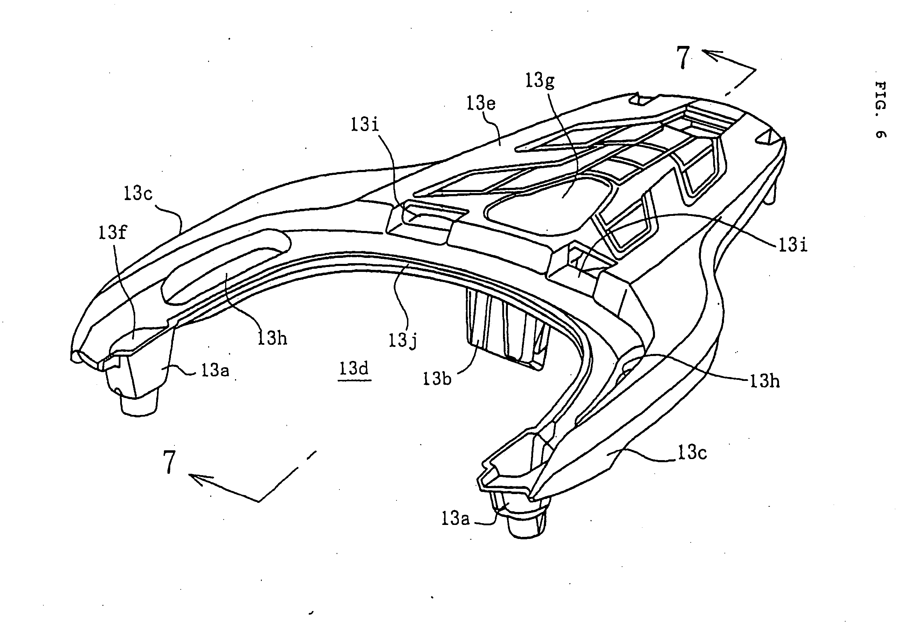

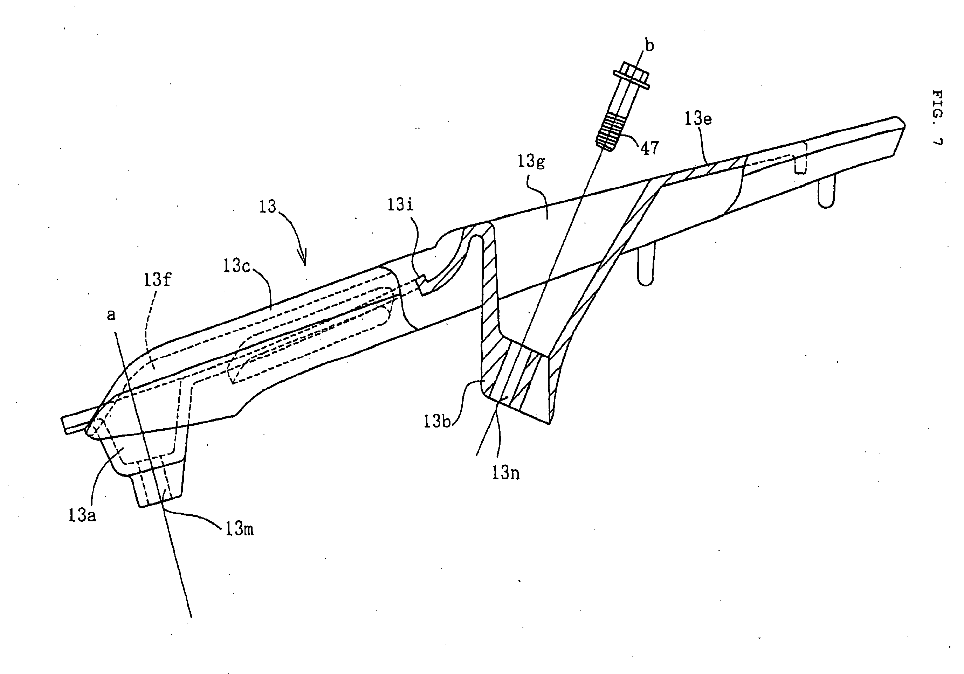

Fig. 6 is a perspective view of the rear carrier and Fig. 7 is a cross-sectional view taken along line 7-7 of Fig. 6. Referring to Figs. 6 and 7, the rear carrier 13 is provided with a pair of left and right arm portions 13c furcately protruding toward the front. The arm portions 13c surround a forwardly opening curved space 13d and are formed at respective front ends thereof with attachment bosses 13a formed to protrude downward. A rear wall 13e protrudes rearward from the vicinity of the central portion surrounding the rear portion of the curbed space 13d.

The left and right front portions of the rear wall 13e are integrally continuous with the rear portions of the left and right arm portions 13c, respectively. The upper surface of the rear wall 13e is formed almost planar and formed with the downward protruding attachment boss 13b at its front center. Reference numeral 13f denotes an opening for the attachment boss 13a formed to face the surface of the arm portion 13c and 13g denotes an opening for the rear wall 13e formed to face the surface of the rear wall 13e. The arm portions 13c and the rear wall 13e are formed with positioning recessed portions 13h and 13i, respectively in the vicinity of the edge portion thereof so as to face the curved space 13d. Reference numeral 13j denotes a front edge of the rear wall 13e formed to face the curved space 13d.

Referring to Fig. 7, reference numerals 13m and 13n denote bolt-through holes formed in the attachment bosses 13a and 13b, respectively. The attachment bosses 13a, 13b are bottomed and opened upwardly. For the attachment boss 13b, a bolt 47 is inserted into a cylindrical space from above the rear wall 13e through the opening 13g and is fastened to the nut 44 (Fig. 4) through the bolt-through hole 13n along the fastening direction "b". This applies to the fastening of the attachment boss 13a.

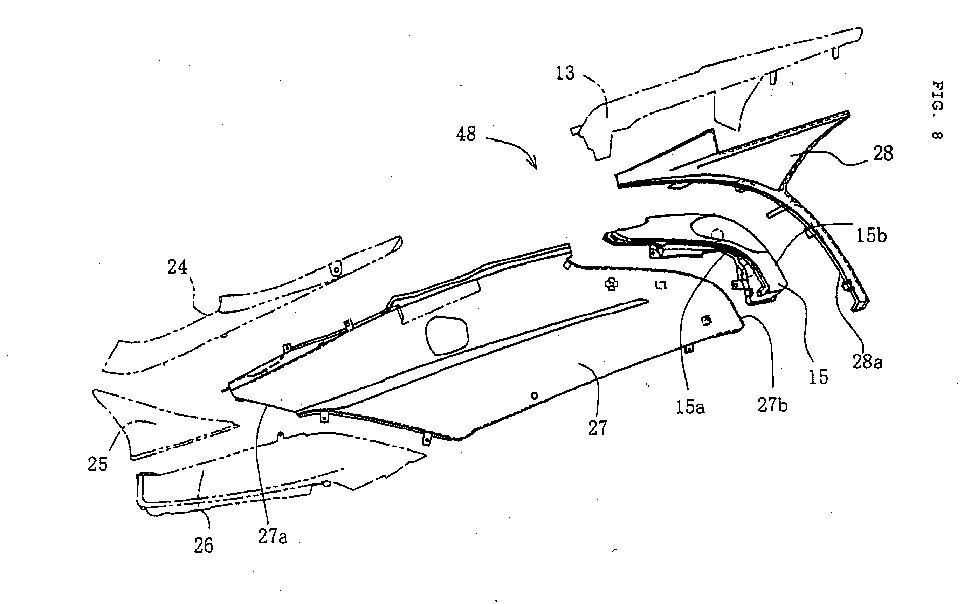

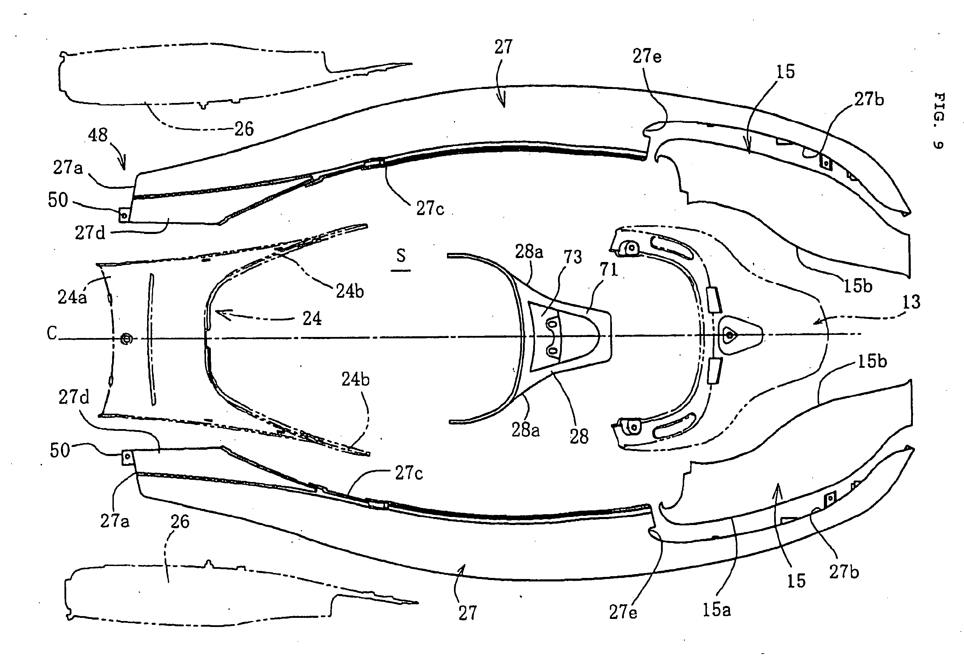

A description is next made of how to attach the rear cover 48. Fig. 8 is an exploded lateral view mainly illustrating the rear cover 48 and Fig. 9 is a plan view of Fig. 8.

Referring to Fig. 8, the front end upper portion of the rear side cover 27 is covered by and joined with the front center cover 24. The front edge portion 27a is connected to and joined with the rear edge portion of each of the front side cover 25 and the step floor 26.

A rear edge portion 27b of the rear side cover 27 is convexly curved to run obliquely upwardly and rearward. The rear combination lamp 15 is integrally joined to the rear side cover 27 by putting a front edge portion 15a curved to conform to the rear edge portion 27 thereon. A rear edge portion 15b of the rear combination lamp 15 and a connection edge portion 28a of the rear center cover 28 are formed to have curves conforming to each other. Both the edge portions opposed to each other are integrally joined together. The rear carrier 13 is mounted to the body frame so as to overlap the rear center cover 28 from above.

Referring to Fig. 9, the front center cover 24 and rear center cover 28 provided at the front and rear center, respectively, of the vehicle body and the rear side covers 27 and the rear combination lamps 15 provided to each form a pair of left and right ones are arranged to surround a seat-below space S. Among them, the left and right rear side covers 27, the rear combination lamps 15 and the rear center cover 28, excluding the front center cover 24, are integrally joined together, that is, sub-assembled with each other to form the rear cover 48.

The front center cover 24 is provided with an almost flat front portion 24a and rear portions 24b formed to be horizontally bifurcate and open toward the rearward. The rear ends of the rear portions 24b are respectively connected to the upper edge portions 27c of the rear side covers 27. The rear side covers 27 are elongated in the back and forth direction in such a manner that their intermediate portions bend to protrude outwardly, as viewed from above, namely, as shown in the figure. The rear edge portions 27b are respectively connected to the front edge portions 15a of the rear combination lamps 15. The rear edge portions 15b of the rear combination lamps 15 are respectively connected to the connection edge portions 28a of the rear center cover 28.

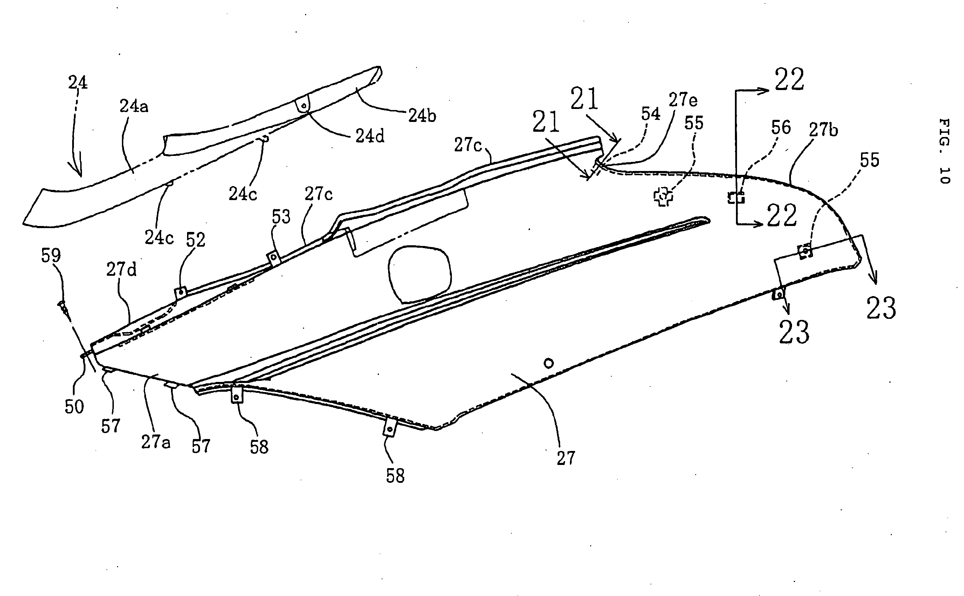

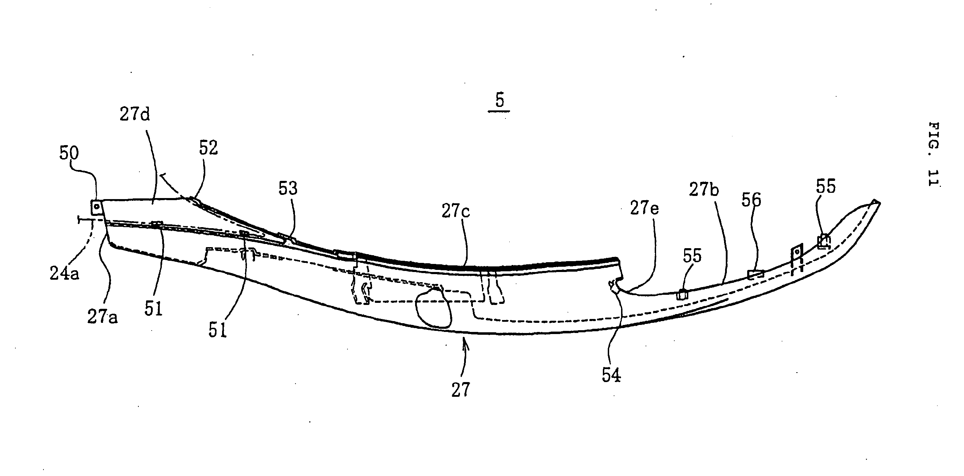

Fig. 10 is a lateral view of the left rear side cover 27 and Fig. 11 is a plan view of Fig. 10. Incidentally, the right rear side cover has a structure symmetrical to that of the left rear side cover 27. Referring to Figs. 10 and 11, the upper edge portion 27c bends to surround the seat-below space S. A front end portion 27d protrudes inside of the vehicle body and overlaps the lateral-lower side of the front portion 24a of the front center cover 24. The front end portion 27d is integrally formed at its front edge with a tongue piece 50 which projects forward with its flat surface running vertically. The tongue piece 50 overlaps the front portion 24a from below and is fastened to the front portion 24a with a tapping screw 59 (Fig. 10).

The front end portion 27d is formed with at its outside portion with engaging holes 51 spaced apart back and forth from each other (Fig. 11). Engaging claws 24c (Fig. 10) formed to project from the lower end of the front portion 24a are each engaged with a corresponding one of the engaging holes 51. Further, the front end portion 27d is formed with upwardly projecting projection-pieces 52, 53. The projection-piece 53 overlaps from inside an attachment portion 24d formed on the lateral surface of the rear portion 24b and is fastened thereto with a tapping screw (not shown).

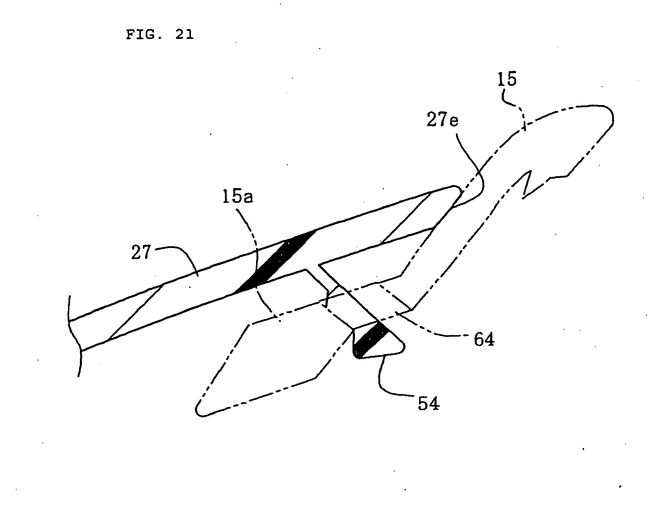

The rear portion of the upper edge portion 27c merges with the front portion of the rear edge portion 27b via a stepped curved portion 27e formed therebetween. The curved portion 27e forms a recessed portion adapted to receive the attachment boss 13a of the rear carrier 13 (Fig. 7) passed therethrough. A claw 54 projects inside the curved portion 27e (see Fig. 21). The rear edge portion 27b bends externally convexedly while its rear end portion extends inside the vehicle body (see Fig. 11).

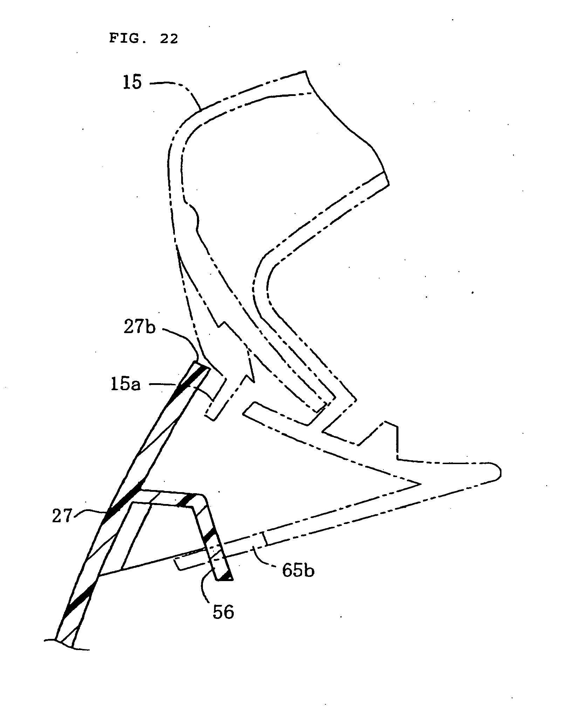

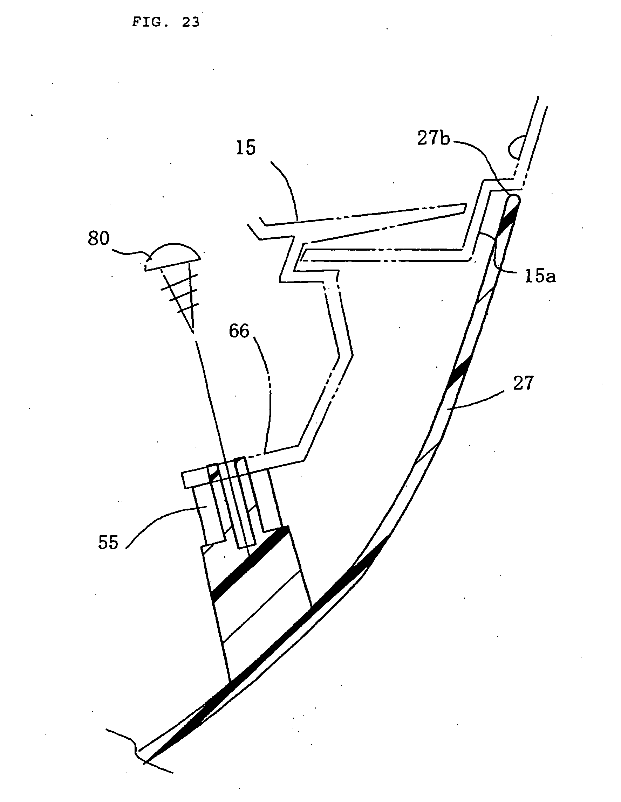

Bosses 55 (see Fig. 23) and a claw 56 (see Fig. 22) are provided on the rear inside lateral surface of the rear side cover 27 so as to be arranged along the rear edge portion 27b and to project inside the vehicle body. The bosses 55 are arranged to be spaced apart above and below from each other with the claw 56 put therebetween. The bosses 55 and the claws 54, 56 constitute the attachment portion of the rear combination lamp 15.

Referring to Fig. 10, the front edge portion 27a is almost linearly formed to extend rearward and obliquely downwardly. Engaging pieces 57 are formed on the upper portion of the front edge portion 27a so as to project forward and insertably engaged with the rear portion of the front side cover 25 (see Fig. 8). The front edge portion 27a is formed on its lower half portion with projection-pieces 58, which overlap from inside the rear portion of the step floor 26 (see Fig. 8) for joint by use of a tapping screw (not shown). The rear side cover 27 is mounted to and positioned relative to the body cover on the front side of the vehicle body by the joint of the engaging pieces 57 and projecting piece 58 and the joint of the tongue piece 50.

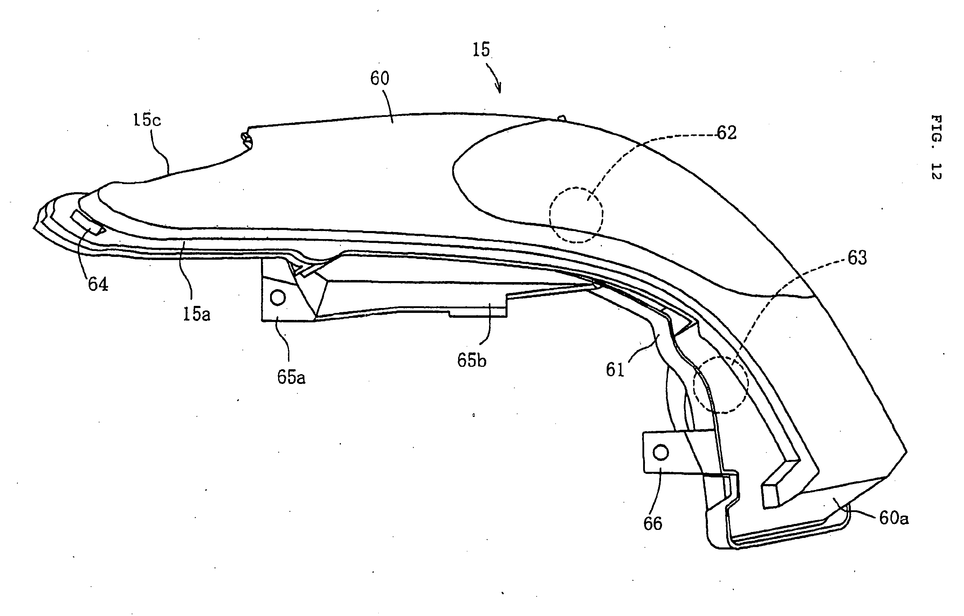

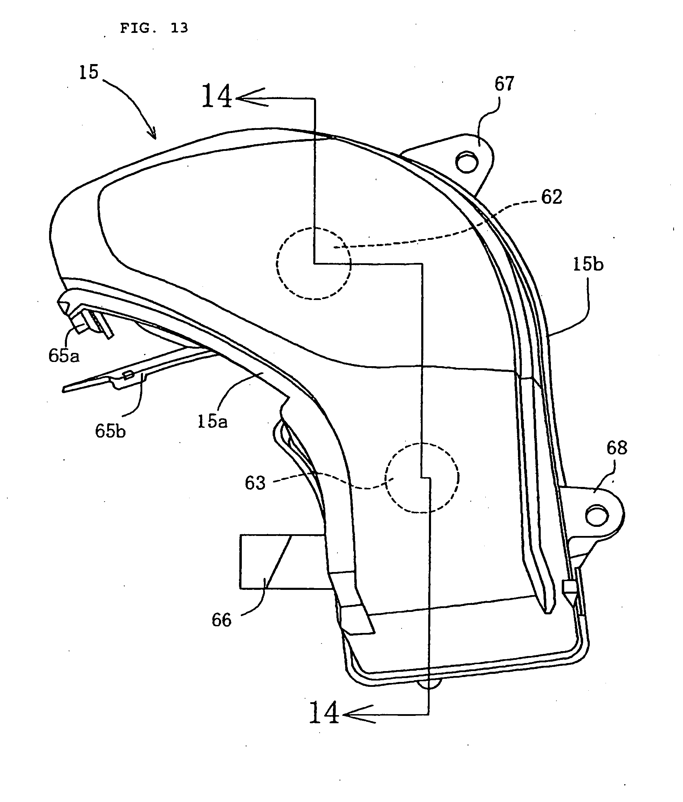

Fig. 12 is a lateral view of the rear combination lamp 15 and Fig. 13 is a rear view. Referring to Figs. 12 and 13, the rear combination lamp 15 is formed to bend like a boomerang as viewed from the side, and to be elongate in the back and forth direction. A lens 60 and a housing 61 are formed integrally with each other and a turn-signal lamp 62 and a tail lamp 63 are housed inside the lens and housing so as to be spaced apart from each other back and forth and above and below.

The front edge portion 15a is formed like a step on the front edge portion of the lens 60 and the rear edge portion 27b (Fig. 10) of the rear side cover 27 overlaps the step. The rear combination lamp 15 is provided at its front edge portion with a curved edge portion 15c which bends convexedly rearward. The curved edge portion 15c and the curved portion 27e (Fig. 11) defines a space therebetween adapted to receive the attachment boss 13a (Fig. 7) inserted thereinto.

An engaging portion 64 with the claw 54 (Fig. 10) is formed at a joint between the front edge portion 15a and a curved edge portion 15c. The front edge portion 15a is formed with a fastening portion 65a and an engaging portion 65b at its intermediate portion and with an attachment projection 66 at its lower portion. The fastening portion 65a and engaging portion 65b are formed to protrude downward. The attachment projection 66 is formed to project forwardly. Incidentally, the circumferential edge portion (excluding the lower portion) of the lens 60 running from the front edge portion 15a through the curved edge portion 15c to the rear edge portion 15b (see Fig. 13) is plated silver-metallically.

Referring to Fig. 13, attachment projections 67 and 68 are provided at upper and lower portions, respectively, of the rear edge portion 15b.

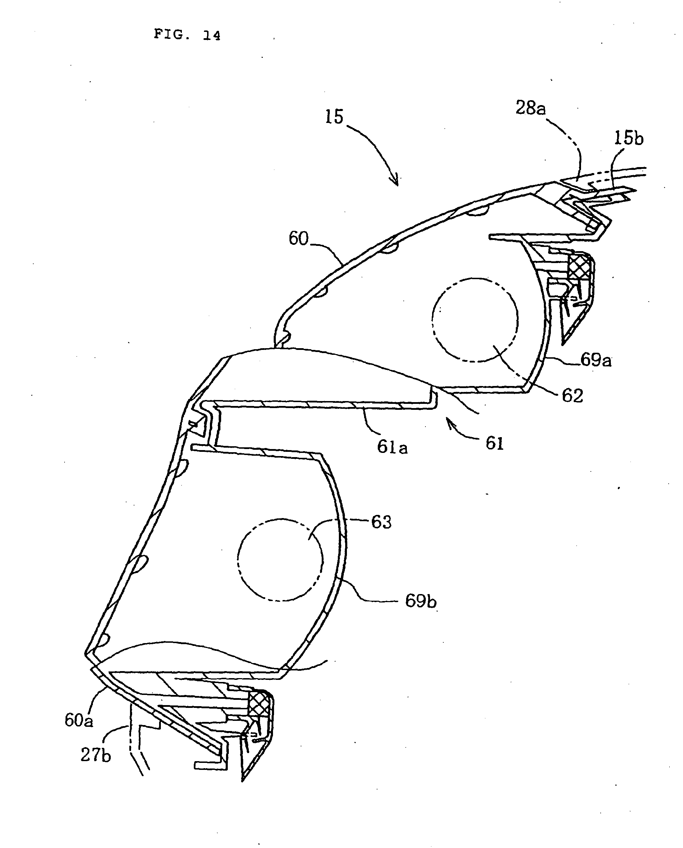

Fig. 14 is a cross-sectional view taken along line 14-14 of Fig. 13. The housing 61 is partially formed as reflectors 69a, 69b to allow illumination axes of the turn-signal lamp 62 and the tail lamp 63 to face the rearward. However, the turn-signal lamp 62 illuminates the side so as to be sufficiently visible from the side. The turn-signal lamp 62 and the tail lamp 63 are partitioned above and below by a partition wall 61 a formed integrally with part of the housing 61 to prevent the leakage of light to the others.

The rear edge portion 15b is formed like a flange to overlap the inside of the connection edge portion 28a. A rear end portion of the rear edge portion 27b included in the rear side cover overlaps the surface of the lower slant surface 60a of the lens 60 at the lower portion of the rear combination lamp 15.

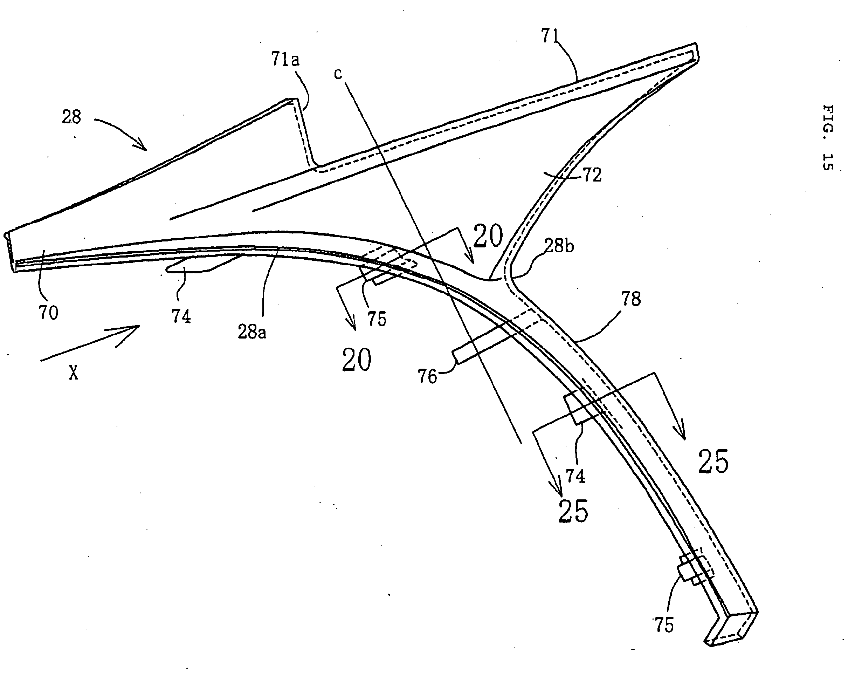

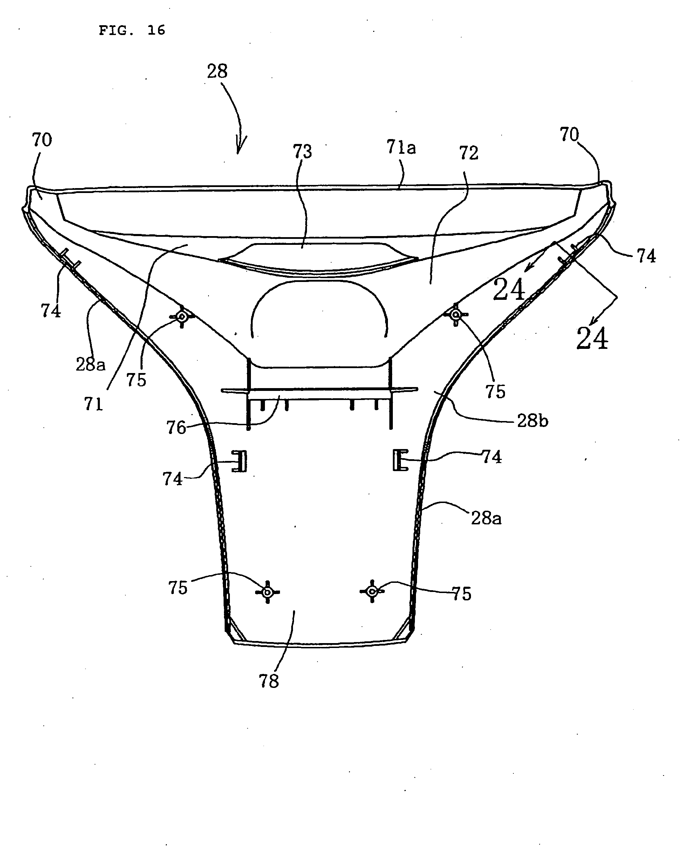

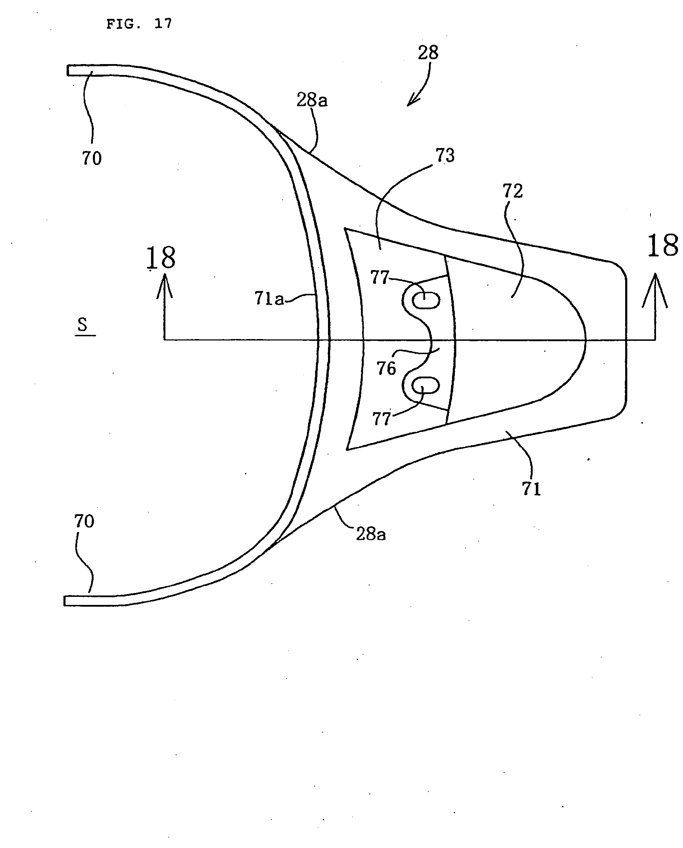

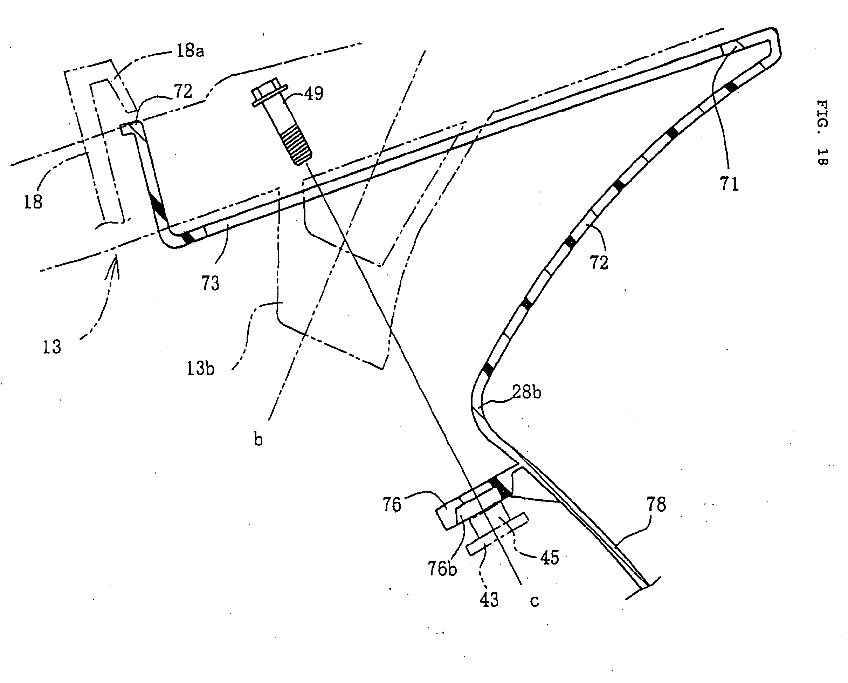

Fig. 15 is a lateral view of the rear center cover 28. Fig. 16 illustrates the rear center cover as viewed from arrow X of Fig. 15. Fig. 17 is a plan view of the rear center cover and Fig. 18 is a cross-sectional view taken along line 18-18 of Fig. 17.

Referring to Fig. 15, the connection edge portion 28a is formed like a curve that bends rearward convexedly and integrally includes an arm portion 70 which protrudes upwardly forwardly; an extension 71 rearward protruding like an almost flat plate; and a rear wall 78 which extends downward from a proximal portion 28b of an almost invert triangular elevated portion 72 while running along the curve of the connection edge portion 28a. A front portion 71 a of the extension 71 is formed like a rising flange and merges with the arm portion 70.

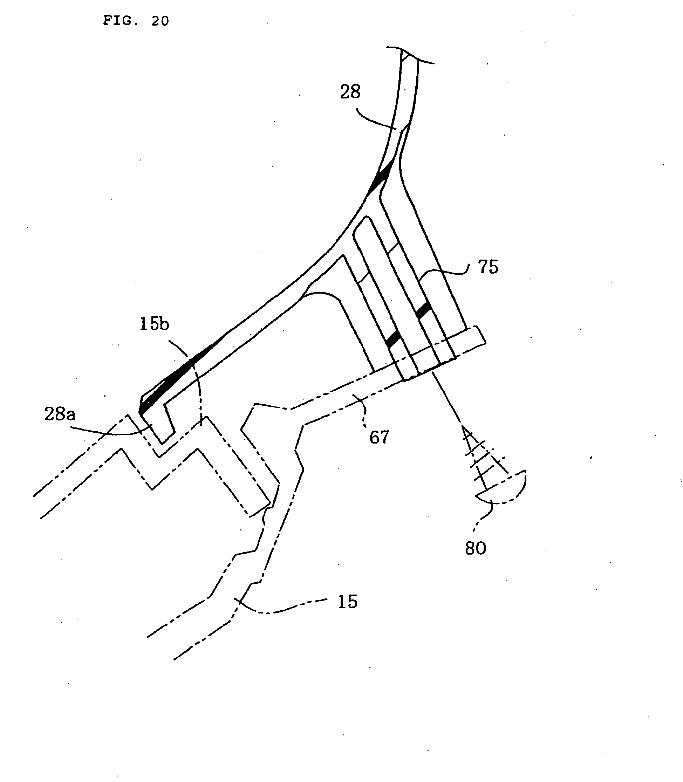

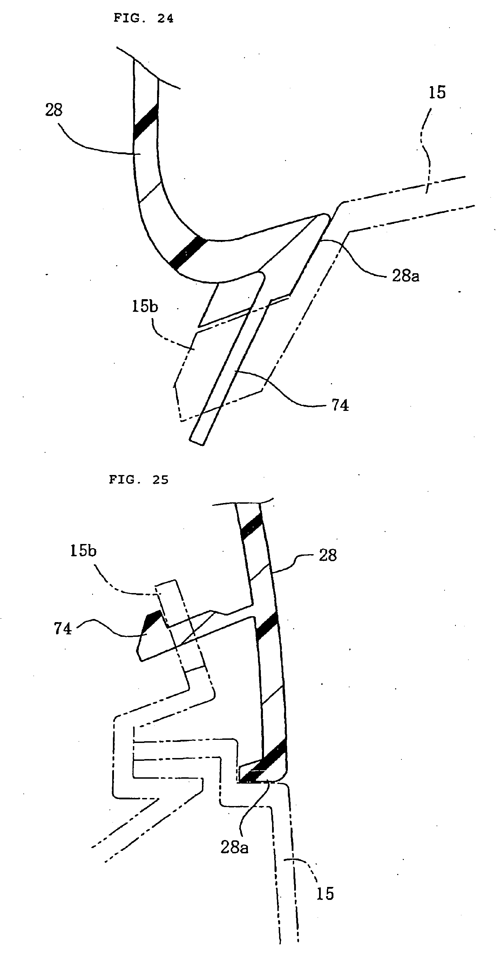

Claws 74 are formed at an upper portion of the connection edge portion 28a and in the vicinity of the intermediate portion thereof so as to project forwardly (see Fig. 25). Bosses 75 are formed at an intermediate portion between the upper and lower claws 74 and in the vicinity of the lower end portion of the rear wall 78 so as to project forwardly (see Fig. 20). Further, an attachment projection 76 is formed in the vicinity of the base portion 28b so as to project forwardly from the rear wall 78.

Referring to Fig. 16, the rear center cover 28 is provided with the rear wall 78 in which as viewed from the front an upper portion is increased in width and progressively decreased in width as it goes toward a lower portion. The rear center cover 28 includes the arm portion 70 having an upper portion formed like a rising flange and the extension 71 lower by one step. The extension 71 is formed with a central opening portion 73. The elevated portion 72 is progressively reduced in width as it goes toward the downside and is joined with the rear wall 78. The claws 74 and bosses 75 are arranged upwardly and downwardly along the connection edge portion 28a in a symmetrical manner. The attachment projection 76 is formed at a central portion so as to extend laterally.

Referring to Fig. 17, the arm portions 70 merge from the left and right with the front portion 71 a of the extension 71 and curve to surround the seat-below space S together with the front portion 71 a and their left and right ends extend forwardly. The extension 71 has a planar upper surface, is formed substantially equal to that of the rear wall 13e of the rear carrier 13 (Fig. 6) and overlap the rear wall 13e from below. The extension 71 is formed at its center with a central opening portion 73 bored above and below. Part of the attachment projection 76 projects through the central opening portion 73 from the rear wall 78 so as to be able to be seen from above.

Referring to Fig. 18, the extension 71 extends obliquely upwardly and reward in almost-parallel to the rear wall 13e of the rear carrier 13. The elevated portion 72 is provided to be close to or come into contact with the bottom surface of the rear carrier 13. The central opening portion 73 has such a sufficient size as to receive the attachment boss 13b of the rear carrier 13 passed therethrough and has a size larger than that of the attachment boss 13b in order to enable error adjustment encountered when the rear cover 48 is attached to the vehicle body. The rear wall of the elevated portion 72 slants obliquely downwardly and forwardly toward the base portion 28b from the rear end of the extension 71 so as to shield the attachment boss 13b and the its attachment portion for prevention of external observation.

The attachment projection 76 is formed near the lower portion of the attachment boss 13 so as to project forward from the rear wall 78 in a shelf-like manner. The attachment projection 76 slants forwardly and obliquely downwardly and this slant surface is orthogonal to the straight line "c", which serves as a fastening axis. The attachment projection 76 overlaps the boss 43. A boss 49 is passed through the central opening portion 73 from above along the fastening axis "c" and fastened to the nut 45 attached preliminarily to the boss 43. Although the attachment boss 13b intersects the fastening axis "c" as viewed from the side in the drawing, since the attachment boss 13b is located on the center of the vehicle body and the fastening axis "c" is offset from the attachment boss 13b leftward or rightward, the attachment boss 13b does not have a disadvantage for the attachment. The extension 71 is provided to cover the attachment projection 76 from above. The upper end of the extension front portion 71a is designed to enter below the rear end flange 18a of the luggage box 18. This applies to the continuous arm portions 70.

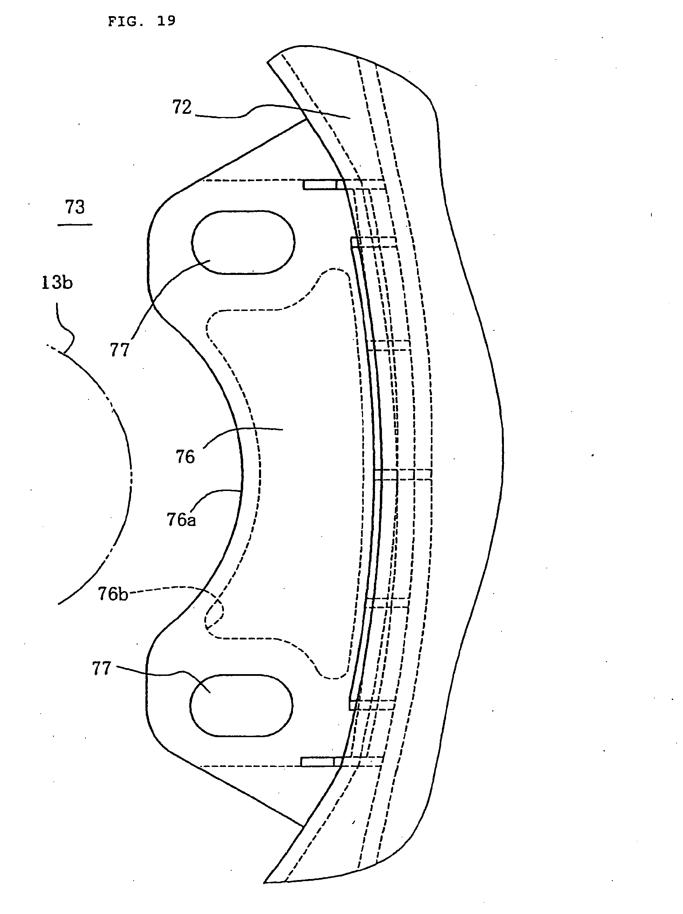

Fig. 19 illustrates the attachment projection 76 as viewed from obliquely above along the fastening axis "c" (Fig. 18). A pair of left and right longitudinal holes 77 are located on the left side and right side, respectively, of the attachment projection 76, that is, are located to be offset leftward and rightward, respectively, from the center of the vehicle body. The longitudinal holes 77 are each formed long in the back and forth direction.

The attachment projection 76 projects into the central opening portion 73 and overlaps the stay 43 (Figs. 4 and 18). The bolt is passed through the central opening portion 73 from the upside of the fastening axis "c" into the longitudinal hole 77 and fastened to the nut 46 of the stay 43. In this case, since the longitudinal hole 77 is formed long in the back and forth direction, an attachment error can be accommodated.

An avoiding portion 76a recessed rearward is formed between the left and right longitudinal holes 77 so as to avoid interference with the attachment boss 13b inserted into the central opening portion 73. The attachment projection 76 is formed thick at a portion surrounding the longitudinal hole 77 and is formed with weight-reduction recesses 76b on the back of the intermediate portion thereof.

Assembly of the rear cover 48 is next described. Referring to Fig. 9, first, the left and right rear side covers 27 are integrally joined to the left and right rear combination lamps 15, respectively, and next the left and right rear combination lamps 15 are integrally joined to the rear center cover 28 from the left and right, respectively. However, the left and right rear combination lamps 15 may integrally be jointed to the rear center cover 28 and next the left and right rear combination lamps 15 may integrally be joined to the left and right rear side covers 27, respectively.

To integrally join the rear side cover 27 to the rear combination lamp 15, the rear edge portion 27b of the rear side cover 27 is put on the front edge portion 15a of the rear combination lamp 15. In this case, the claw 54 is engaged with the engaging portion 64 (Fig. 21) and the claw 56 is engaged with the engaging portion 65b (Fig. 22). Then, the upper and lower bosses 55 are put on the fastening portion 65a and the attachment projection 66, respectively, for fastening with tapping screws 80 (Fig. 23, which illustrates the side of the attachment projection 66. This applies to the side of the fastening portion 65a. Thus, the rear side cover 27 is integrally joined to the rear combination lamp 15 to form a recessed portion adapted to receive the attachment boss 13a passed therethrough, between the curved portion 27e and the curved edge portion 15c.

Next, the connection edge portion 28a of the rear center cover 28 are put on the rear edge portion 15 of the rear combination lamp 15 and the upper and lower claws 74 are engaged with the rear edge portion 15b (Fig. 25). Further, the attachment projections 67, 68 are put on the upper and lower claws 75 for integral fastening from the interior of the vehicle body with the tapping screw 80 (Fig. 20). Thus, the rear side cover 27 and rear combination lamp 15 on one side of the vehicle body are integrally joined to the rear center cover 28. Then, the integrated one of the rear side cover 27 and the rear combination lamp 15 is integrally joined to the rear center cover 28 to complete the rear cover 48 as sub-assembly.

A description is next made of how to mount the rear cover 48 onto the vehicle body. The rear cover 48 is first put on the rear portion of the body frame 1 on which the seat 12 has not been mounted. As shown in Figs. 8 through 11, the tongue piece 50 located at the front end portion of the rear side cover 27, the engaging pieces 57, and the projection-pieces 58 are joined to the front center cover 24, the front side cover 25 and the step floor 26, respectively, to position the front end side. The front center cover 24, the front side cover 25 and the step floor 26 are fixedly positioned with respect to the body frame 1 in advance.

In this case, on the rear portion side of the rear cover 48 the attachment projection 76 is put on the stay 43 (see Figs. 4 and 18). The attachment projection 76 is fastened to the stay 43 to complete the mounting of the rear cover 48.

However, the rear side cover 27, the rear combination lamp 15 and the rear center cover 28 are integrally joined together to add their tolerances. Therefore, it is necessary to accommodate the tolerances through the mounting of the rear side components of the rear cover 48.

To meet the necessity, the longitudinal hole 77 formed in the attachment projection 76 is formed elongate in the back and forth direction. The position of the nut 46 can freely be adjusted in the back and forth direction. Thus, the rear cover can be fastened with the bolt 49 while accommodating the attachment error due to the addition of the tolerances.

Thereafter, the rear carrier 13 is put on the rear center cover 28, and the attachment boss 13b is inserted into the central opening portion 73 and passed through the recessed portion formed between the curved portion 27e and the curved edge portion 15c. The attachment boss 13a is put on the top 41 a and fastened to the nut 44 with the bolt from along the fastening axis "a". The attachment boss 13b is put on the upper end 40a of the boss 40 and fastened to the nut 45 with the bolt from along the fastening axis "b". The attachment boss 13b can be passed through the rear center cover 28 via the central opening portion 73 and the avoiding portion 76a of the attachment projection 76.

The operation of the embodiment is next described. As shown in Figs. 4, 8, 9 and 18, the attachment projection 76 projects forward from the rear center cover 28 at a position inside between the left and right rear combination lamps 15 separately arranged at the rear end portions of the left and right rear side covers 17, respectively. In addition, the attachment projection 76 is attached to the stay 43 provided at the rear end of the rear portion 34b of the rear pipe 34 so as to be adjustable in position through the longitudinal holes 77. Thus, the attachment projection 76 can be provided using an unused spaced between the left and right rear combination lamps 15. Since the attachment projection 76 is disposed close to the vehicle body center C, the fastening work of the rear cover 48 along with its adjustment is facilitated at the central position of the vehicle body, that is, at almost the same position as compared with the case where the mounting work of the rear side cover 27 is done for each of the left and right of the vehicle body. This improves workability.

Even if the extension 71 of the rear cover 48 covers the attachment projection 76 from above, attachment work can be done through the central opening 73 from above the vehicle. Thus, the workability further be improved particularly in attachment work that needs such adjustment.

The rear carrier 13 is secured to the rear portion 34b of the body frame 1 using the central opening portion 73. It is not necessary to provide at the rear cover 48 another opening portion used to secure the rear carrier to the body frame 13. Thus, there is no possibility that an increase of an opening portion in addition to the central opening portion 73 degrades the strength and external appearance of the rear cover 48.

The central opening portion 73 provided in the upper surface of the extension 71 of the rear center cover 28 constituting part of the position-adjustable rear cover 48 is largely formed to have a margin as a adjustable margin with respect to the rear carrier 13 secured to the body frame 1. This produces a gap between the attachment boss 13b of the rear carrier 13 and the circumferential edge portion of the central opening portion 73. However, the central opening portion 73 is provided to the extension 71 being close and opposed to the bottom surface of the rear carrier 13. Thus, the gap is hidden to become inconspicuous.

Further, the rear combination lamp 15 is used to connect the rear side cover 27 with the rear center cover 28, whereby the rear cover 48 is structured to be divided into the rear side cover 27 and the rear center cover 28. Thus, the rear cover 48 which otherwise tends to be increased in size can be divided into small components.

Incidentally, the present invention is not limited to the embodiments described above but can be modified or altered in various ways within the principle of the invention as described by the claims. For example, the rear cover 48 may not be formed by integrally joining the rear side cover 27 to the rear center cover 28 through the rear combination lamp 15, that is, may be formed not through the rear combination lamp 15. In this case, the rear side cover 27 and the rear center cover 28 may be formed differently from or integrally with each other. In addition, the rear combination lamp 15 needs only to be mounted to the rear side cover 27. The longitudinal hole 77 may be only one. Further, the rear combination lamp 15 may be a lamp device of various types.

The invention is directed to facilitating positioning of a rear cover at the time of mounting it to the vehicle body side.

A body cover which covers below a seat, namely, a rear cover 48 is formed by integrally joining together a pair of left and right rear side covers 27, a pair of left and right rear combination lamps 15 and a rear center cover 28 provided at the center of a vehicle body. The front end side of the rear cover 48 is positioned by integrally joining the front end of the rear side cover 27 with the front center cover 24 and with a step floor 26. An attachment projection 76 projecting into a central opening portion 73 provided in an extension 71 of the rear center cover 28 is then attached to the body frame side by passing bolts through corresponding longitudinal holes 77 preliminarily provided. Thus, the rear portion of the rear cover 48 is attached while accommodating an error.

## Claims

1. A vehicle comprising a cover arrangement structure, said vehicle including a seat (12), a body frame (1) extending below the seat (12) and toward the rearward of the vehicle, a body cover (20) covering said body frame (1) and including a rear cover (48) which covers the body frame (1) below then seat (12) at least from both sides and from the rearward, and lamp devices (15) attached to the rear cover (48), the rear cover (48) being mounted to a vehicle body side at front and rear portions thereof,
wherein the rear cover (48) includes a pair of left and right rear side covers (27) and a rear center cover (28) which covers a rear end of the body frame (1) from the rearward;
wherein the lamp devices (15) are composed as a pair of left and right ones; and
wherein the body cover (20) includes an extension (71) provided to cover an attachment projection (76) from above, the extension (71) is formed with an opening (73) which opens upward, and the attachment projection (76) is provided to be oriented to the opening (73),
**characterized in that**
the lamp devices (15) are attached to the respective rear ends of the left and right rear side covers (27) so as to be spaced apart from side to side;
the attachment projection (76) is provided on the rear center cover (28) so as to project between the left and right lamp devices and inside the vehicle and is attached to the rear end of the body frame (1) in a position-adjustable manner; and
a rack (13) is provided above the rear end portion of the body cover (20) and a fixing portion (13b) extending from a lower surface of the rack (13) is secured to the body frame (1) through the opening (73).

2. The vehicle according to claim 1, wherein the body cover (20) is provided with an elevated portion which covers an outer circumference of the fixing portion (13b) of the rack (13) and which is elevated so as to be close to or come into contact with the bottom surface of the rack (13) forming a carrier (13) and the elevated portion is provided with the opening (73) on a side opposed to the bottom surface of the rack (13).

3. The vehicle according to claim 1 or 2, wherein the rear cover (48) is divided into the rear side covers (27) and the rear center cover (28) by the lamp devices (15) and the left and right rear side covers (27) are integrally joined to the single rear center cover (28) through the left and right lamp devices (15), respectively.

## Patentansprüche

1. Fahrzeug, das eine Abdeckungsanordnungsstruktur aufweist, wobei das Fahrzeug einen Sitz (12), einen Rumpfrahmen (1), der sich unter dem Sitz (12) und zur Rückseite des Fahrzeugs hin erstreckt, eine Rumpfabdeckung (20), die den Rumpfrahmen (1) abdeckt und eine hintere Abdeckung (38) enthält, die den Rumpfrahmen (1) unter dem Sitz (12) an zumindest beiden Seiten und von hinten her abdeckt, und Leuchtvorrichtungen (15), die an der hinteren Abdeckung (48) angebracht sind, enthält, wobei die hintere Abdeckung (48) an ihren vorderen und hinteren Abschnitten am Fahrzeugrumpf angebracht ist, worin die hintere Abdeckung (48) ein Paar von linken und rechten hinteren Seitenabdeckungen (27) sowie eine hintere Mittelabdeckung (28) enthält, die ein Hinterende des Rumpfrahmens (1) von hinten her abdeckt;
worin die Leuchtvorrichtungen (15) als linkes und rechtes Paar zusammengesetzt sind; und
worin die Rumpfabdeckung (20) eine Verlängerung (71) enthält, die so vorgesehen ist, dass sie einen Befestigungsvorsprung (76) von oben her abdeckt, wobei die Verlängerung (71) mit einer nach oben offenen Öffnung (73) ausgebildet ist und der Befestigungsvorspruch (76) so vorgesehen ist, dass er zu der Öffnung (73) hin orientiert ist,
**dadurch gekennzeichnet, dass**
die Leuchtvorrichtungen (15) an den jeweiligen Hinterenden der linken und rechten hinteren Seitenabdeckungen (27) so angebracht sind, dass sie mit seitlichem Abstand voneinander angeordnet sind;
der Befestigungsvorsprung (76) an der hinteren Mittelabdeckung (28) so vorgesehen ist, dass er zwischen die linken und rechten Leuchtvorrichtungen und innerhalb des Fahrzeugs vorsteht und an dem Hinterende des Rumpfrahmens (1) positionseinstellbar angebracht ist; und
ein Gestell (13) über dem hinteren Endabschnitt der Rumpfabdeckung (20) vorgesehen ist und ein sich von einer Unterseite des Gestells (13) erstreckender Befestigungsabschnitt (13b) an dem Rumpfrahmen (1) durch die Öffnung (73) durch gesichert ist.

2. Fahrzeug nach Anspruch 1, worin die Rumpfabdeckung ((20) mit einem erhöhten Abschnitt versehen ist, der einen Außenumfang des Befestigungsabschnitts (13b) des Gestells (13) abdeckt und der erhöht ist, so dass er der Bodenfläche des einen Träger (13) bildenden Gestells (13) benachbart ist oder mit dieser in Kontakt kommt, und der erhöhte Abschnitt an einer der Bodenfläche des Gestells (13) entgegengesetzten Seite mit der Öffnung (73) versehen ist.

3. Fahrzeug nach Anspruch 1 oder 2, wobei die hintere Abdeckung (48) in die hinteren Seitenabdeckungen (27) und die hintere Mittelabdeckung (28) durch die Leuchtvorrichtungen (15) unterteilt ist, und die linken und rechten hinteren Seitenabdeckungen (27) mit der einzigen hinteren Mittelabdeckung (28) durch die jeweiligen linken und rechten Leuchtvorrichtungen (15) integral verbunden sind.

## Revendications

1. Véhicule comprenant une structure d'agencement de couvercle, ledit véhicule comprenant un siège (12), un châssis de carrosserie (1) s'étendant au-dessous du siège (12) et vers l'arrière du véhicule, un couvercle de carrosserie (20) recouvrant ledit châssis de carrosserie (1) et comprenant un couvercle arrière (48) qui recouvre le châssis de carrosserie (1) au-dessous du siège (12) au moins à partir des deux côtés et de l'arrière, et des dispositifs de lampe (15) fixés sur le couvercle arrière (48), le couvercle arrière (48) étant monté sur un côté de la carrosserie du véhicule au niveau de ses parties avant et arrière,
dans lequel le couvercle arrière (48) comprend une paire de couvercles latéraux arrière gauche et droit (27) et un couvercle central arrière (28) qui recouvre une extrémité arrière du châssis de carrosserie (1) à partir de l'arrière ;
dans lequel les dispositifs de lampe (15) sont composés comme une paire de dispositifs gauche et droit ; et
dans lequel le couvercle de carrosserie (20) comprend une extension (71) prévue pour recouvrir une saillie de fixation (76) de dessus, l'extension (71) est formée avec une ouverture (73) qui s'ouvre vers le haut, et la saillie de fixation (76) est prévue pour être orientée vers l'ouverture (73),
**caractérisé en ce que**
les dispositifs de lampe (15) sont fixés sur les extrémités arrières respectives des couvercles latéraux arrières gauche et droit (27) afin d'être espacés d'un côté à l'autre ;
la saillie de fixation (76) est prévue sur le couvercle central arrière (28) afin de faire saillie entre les dispositifs de lampe gauche et droit et à l'intérieur du véhicule, et est fixée sur l'extrémité arrière du châssis de carrosserie (1) de manière à pouvoir régler sa position ; et
une crémaillère (13) est prévue au-dessus de la partie d'extrémité arrière du couvercle de carrosserie (20) et une partie de fixation (13b) s'étendant à partir d'une surface inférieure de la crémaillère (13) est fixée au châssis de carrosserie (1) par l'ouverture (73).

2. Véhicule selon la revendication 1, dans lequel le couvercle de carrosserie (20) est prévu avec une partie élevée qui recouvre une circonférence externe de la partie de fixation (13b) de la crémaillère (13) et qui est élevée afin d'être à proximité de ou de venir en contact avec la surface inférieure de la crémaillère (13) formant un support (13) et la partie élevée est prévue avec l'ouverture (73) sur un côté opposé à la surface inférieure de la crémaillère (13).

3. Véhicule selon la revendication 1 ou 2, dans lequel le couvercle arrière (48) est divisé en couvercles latéraux arrières (27) et couvercle central arrière (28) par les dispositifs de lampe (15) et les couvercles latéraux arrières gauche et droit (27) sont assemblés de manière solidaire au seul couvercle central arrière (28) par le biais des dispositifs de lampe gauche et droit (15), respectivement.
